# FASCICULE DE BREVET EUROPEEN

(11) **EP 1 474 711 B1**
(45) Date de publication et mention de la délivrance du brevet: **17.08.2005**
(21) Numéro de dépôt: 02790559.5
(22) Date de dépôt: 15.11.2002
(51) Int. Cl.: G02B 5/28, G02B 5/20

(54) **COMPOSANT DE FILTRAGE OPTIQUE ACCORDABLE**
ABSTIMMBARES OPTISCHES FILTER
TUNABLE OPTICAL FILTER COMPONENT

(30) Priorité: 16.11.2001 FR 0114856
(43) Date de publication de la demande: 10.11.2004
(73) Titulaire: Atmel Grenoble S.A., 38521 Saint-Egrève (FR)
(72) Inventeur: PAUTET, Christophe, Thales Intellectual Property, F-94117 Arcueil cedex (FR); HUGON, Xavier, Thales Intellectual Property, F-94117 Arcueil cedex (FR)
(74) Mandataire: Guérin, Michel
(86) Numéro de dépôt international: PCT/FR2002/003920
(87) Numéro de publication internationale: WO 2003/042729

(56) Documents cités:
- EP-A- 1 128 197
- US-A- 5 022 745
- US-A- 5 291 502
- US-A- 5 629 951
- US-A- 5 646 729
- US-B1- 6 295 130

## Description

L'invention concerne les filtres optiques sélectifs en longueur d'onde et accordables, permettant de laisser passer la lumière d'une bande spectrale optique étroite, centrée autour d'une longueur d'onde ajustable, et d'arrêter le passage de longueurs d'onde situées en dehors de cette bande. L'ajustement de la longueur d'onde centrale de la bande spectrale étroite se fait par des moyens électriques.

Le mot lumière est entendu au sens large et inclut notamment des bandes spectrales dans l'infrarouge comme on le verra ci-après, une application principale de l'invention étant le filtrage de lumière dans les différentes bandes de télécommunications par fibres optiques comprises entre 1,3 et 1,61 micromètre.

L'intérêt de ces bandes de 1,3 à 1,61 micromètre résulte de ce que les fibres optiques actuelles, en verre, présentent une faible atténuation et que les signaux optiques peuvent donc être transmis sur de très grandes distances. Dans ce qui suit, on expliquera l'invention à propos de cette bande spectrale, étant entendu que l'invention est transposable à d'autres bandes si le besoin s'en fait sentir, en utilisant les matériaux adaptés à ces bandes différentes.

Dans un réseau de télécommunications par fibre optique, on peut utiliser un câble de plusieurs fibres optiques pour réaliser plusieurs canaux de transmission différents ; on peut aussi effectuer un multiplexage temporel des informations pour atteindre le même but ; mais la tendance actuelle, pour un accroissement plus important de la capacité de débit d'informations du réseau, est de transmettre simultanément sur la même fibre optique plusieurs longueurs d'onde lumineuses modulées indépendamment les unes des autres et définissant chacune un canal d'information. La norme ITU (International Telecommunications Union) 692 propose de définir des canaux adjacents de largeur de bande spectrale optique 100 GHz, centrés sur N fréquences optiques normalisées adjacentes dont les valeurs sont 200 térahertz, 199,9 térahertz, 199,8 térahertz, etc., correspondant à N longueurs d'onde de 1,52 micromètre jusqu'à 1,61 micromètre. Sur un canal de cette largeur de bande on peut effectuer une modulation de lumière de 10 à 20 Gigabits par seconde sans trop de risque d'interférence avec les canaux de bandes spectrales immédiatement adjacentes (en utilisant des impulsions de modulation de forme gaussienne pour minimiser la bande passante occupée par cette modulation). Cette technique de multiplexage fréquentiel est appelée DWDM, de l'anglais "Dense Wavelength Division Multiplexing".

Dans un réseau de télécommunications, le problème est donc de pouvoir recueillir la lumière correspondant à un canal déterminé sans perturber la lumière des canaux voisins. Par exemple, à un noeud de transmission du réseau, affecté à l'émission et à la réception d'informations du canal i, il faut pouvoir recueillir la lumière à une fréquence centrale Fᵢ (longueur d'onde λᵢ) sans gêner la transmission de la lumière modulant les fréquences centrales F₁ à F_{N}, alors que ces fréquences optiques sont très rapprochées les unes des autres.

Pour cela, on a besoin de réaliser des composants de filtrage optique très sélectifs en longueur d'onde lumineuse, capables de laisser passer la fréquence optique centrale Fᵢ et les fréquences situées dans une bande étroite inférieure à 50 GHz de part et d'autre de cette fréquence, et d'arrêter les autres bandes. A la sortie d'un tel filtre on ne recueille que la lumière du canal i et on peut la démoduler pour recueillir l'information utile.

On a déjà proposé de réaliser des composants de filtrage fonctionnant sur le principe des interféromètres de Fabry-Pérot, réalisés par dépôts de couches semiconductrices séparées les unes des autres par des lames d'air d'épaisseurs calibrées en rapport avec la longueur d'onde λᵢ à sélectionner. Un interféromètre comprend en pratique deux miroirs à couches diélectriques superposées (miroirs de Bragg), à fort coefficient de réflexion, séparés par une lame transparente d'épaisseur optique k.λᵢ (épaisseur réelle k.λᵢ si la lame est une lame d'air) où k est un entier définissant l'ordre du filtre interférométrique. Le phosphure d'indium (InP) est bien adapté à ces réalisations en raison notamment de sa transparence pour les longueurs d'onde considérées, de son indice de réfraction très élevé, et de la possibilité de déposer des couches épitaxiales d'épaisseur bien contrôlée.

Si les épaisseurs de couches et les intervalles entre couches sont très bien contrôlés, et si les matériaux ont un fort indice de réfraction, un tel filtre s'avère très sélectif.

Une telle réalisation est décrite dans l'article de A. Spisser et autres, "Highly Selective 1.55 micrometer InP/airgap micromachined Fabry-Perot filter for optical communications" dans Etectronics Letters, N°34(5), pages 453-454, 1998. D'autres réalisations ont été proposées, en silicium micro-usiné, et en alliages à base d'arséniure de gallium.

Ces filtres peuvent être accordables par variation de l'épaisseur de la cavité résonante de Fabry-Pérot, c'est-à-dire de la lame transparente séparant les deux miroirs. La cavité est délimitée par deux couches semiconductrices en vis-à-vis, dont l'espacement est défini très précisément lors de la fabrication ; en prenant un contact électrique sur chacune d'elles (les couches étant supposées suffisamment conductrices ou revêtues d'un matériau conducteur), on peut appliquer une tension continue créant entre les couches en vis-à-vis des forces électrostatiques tendant à modifier cet espacement d'une manière contrôlée.

On a montré qu'on pouvait réaliser des filtres interférométriques dont les couches sont suspendues à des bras de suspension micro-usinés de raideur suffisamment faible pour qu'une tension de quelques volts suffise à modifier l'accord du filtre sur une centaine de nanomètres, par exemple sur toute la gamme de longueurs d'onde de la bande normalisée de 1,52 à 1,61 micromètre. L'épaisseur nominale de la cavité est par exemple de 0,785 micromètre et l'application d'une tension de quelques volts permet de faire varier cette épaisseur de 100 ou 200 nanomètres en plus ou en moins, suffisant à modifier l'accord du filtre sur toute la bande spectrale de la norme ITU. En pratique, l'accord peut être modifié de 1 GHz par millivolt, ce qui est très satisfaisant puisque avec une modification de tension de commande de 50 à 100 millivolts on peut changer de canal.

Il suffit donc d'établir une table de correspondance entre un numéro de canal (donc une longueur d'onde centrale) et une tension de commande à appliquer pour pouvoir sélectionner n'importe quel canal et envoyer la sortie du filtre vers un démodulateur (photodétecteur) qui convertit en signal électrique l'information transportée par ce canal.

On comprend cependant que les conditions d'accord seraient faciles à maîtriser si les fréquences centrales étaient éloignées les unes des autres, par exemple séparées de 1 Térahertz, mais qu'elles sont beaucoup plus difficiles à maîtriser lorsque l'espacement n'est que de 100 Gigahertz. En effet, déjà à l'émission, la fréquence du laser qui émet la porteuse du canal i peut subir des fluctuations et des dérives dues à la température ou au vieillissement (de l'ordre de quelques dizaines de gigahertz).

Il est donc souhaitable d'effectuer un asservissement de tension de commande du filtre une fois qu'il est calé sur la bonne fréquence centrale, afin de maintenir cette tension ensuite.

Les systèmes d'asservissement qui ont pu être proposés sont lourds et coûteux à réaliser, en raison notamment des composants opto-mécaniques nécessaires à leur fonctionnement (coupleurs, connecteurs de fibres optiques, miroirs, etc.). Le brevet EP 1 128 197 décrit un filtre accordable à cavité de Fabry-Pérot.

La présente invention propose un composant de filtrage optique accordable selon la revendication 1 comprenant un filtre optique accordable réalisé dans une structure monolithique micro-usinée, caractérisé en ce que la structure monolithique micro-usinée comprend en outre un élément de détection de lumière servant à l'asservissement de la commande d'accord du filtre, cet élément étant traversé par la majeure partie de la lumière filtrée pour permettre son utilisation.

Cet élément de détection recueille une très petite fraction de la lumière transmise dans la bande désirée, convertit cette fraction en signal électrique qui peut donc servir, après moyennage sur une certaine durée, de signal électrique de commande pour un asservissement tendant à maintenir l'accord du filtre à une valeur qui maximise le signal détecté moyenné. La plus grande partie de la lumière à la longueur d'onde sélectionnée passe à travers le filtre et l'élément de détection, et elle peut être utilisée ailleurs, notamment à des fins de démodulation du signal utile. En raison de sa faible absorption, l'élément de détection placé dans la structure monolithique ne perturbe pas la transmission de l'information et il est seulement utilisé à des fins d'asservissement de l'accord du filtre lui-même. L'asservissement se fait sur la lumière reçue et prend donc en compte les fluctuations de longueur d'onde à l'émission.

Le filtre accordable du brevet US 5 291 502 comporte un détecteur qui n'est pas transparent aux longueurs d'onde filtrées.

Le composant selon l'invention comporte de préférence un substrat semiconducteur transparent (la notion de transparence est évidemment appliquée aux longueurs d'onde de la bande considérée) sur la face avant duquel est formée une superposition de couches également transparentes constituant un filtre interférométrique accordable laissant passer sélectivement la lumière dans une bande spectrale étroite centrée sur une longueur d'onde ajustable par une tension électrique, l'élément de détection de lumière étant formé sur la face avant du substrat, entre le substrat et le filtre. Il est possible également d'envisager une configuration dans laquelle l'éclairement se fait par la face arrière du substrat, l'élément de détection étant alors placé au dessus du filtre.

Le substrat est de préférence un substrat de phosphure d'indium et le filtre interférométrique comporte plusieurs couches de phosphure d'indium séparées par des intervalles de largeur contrôlée parmi lesquels au moins un intervalle est variable sous la commande d'une tension électrique pour assurer l'accord du filtre. Les intervalles sont de préférence réalisés sous forme de lames d'air, mais certains d'entre eux peuvent cependant être remplis d'un matériau transparent d'indice de réfraction différent de celui des couches de phosphure d'indium.

Le détecteur photoélectrique est de préférence réalisé au moyen d'une photodiode à puits quantique. Celle-ci est constituée par au moins une couche semiconductrice dopée de type P, une couche semiconductrice non intentionnellement dopée, et une couche semiconductrice dopée de type N, ces trois couches étant des couches épitaxiales semiconductrices (en accord de maille ou proche de l'accord de maille avec le phosphure d'indium), et une couche épitaxiale très mince, d'un alliage semiconducteur différent, insérée dans la couche non intentionnellement dopée. Cette couche très mince est réalisée en un matériau présentant un « gap » d'énergie, c'est-à-dire un intervalle d'énergie entre bande de conduction et bande de valence, d'environ 0,775 électronvolt , correspondant à une absorption importante dans la bande de longueurs d'onde optiques de 1,5 à 1,6 micromètre. L'épaisseur de la couche épitaxiale très mince est suffisamment faible pour éviter la génération de dislocations par relaxation plastique de cette couche, malgré les différences de maille cristalline susceptibles d'exister entre cette couche et les couches semiconductrices (phosphure d'indium en principe) qui l'encadrent. Cette épaisseur est de préférence inférieure à 10 à 20 nanomètres, afin de limiter l'absorption de la lumière à une valeur de l'ordre du pourcent.

En utilisant un tel détecteur à puits quantique, dont l'absorption est faible en raison de la très faible épaisseur de couche absorbante, on ne perturbe pas la transmission du flux lumineux dans le composant monolithique. L'absorption est de préférence inférieure à 1 à 2% au total.

La couche d'alliage semiconducteur constituant le puits quantique dans la couche d'InP est de préférence en InₓGa₁₋ₓAs où x est choisi pour que le gap du matériau, corrigé des effets de quantification et de contrainte, soit d'environ 0,775 électronvolt pour absorber les longueurs d'onde jusqu'à environ 1,63 micromètres. Le nombre x est de préférence de 0,532. Il peut varier légèrement autour de cette valeur, de préférence dans la gamme 0,53 à 0,63 et dans ce cas la couche a une maille cristalline désadaptée par rapport au phosphure d'indium et son épaisseur doit être limitée à 5 à 20 nanomètres. L'alliage semiconducteur pourrait être aussi en InGaAsP.

D'autres caractéristiques et avantages de l'invention apparaîtront à la lecture de la description détaillée qui suit et qui est faite en référence aux dessins annexés dans lesquels :
- les figures 1 à 3 représentent, respectivement en coupe latérale, en vue de dessus et en perspective, la structure schématique d'un filtre interférométrique monolithique selon l'invention ;
- la figure 4 représente un schéma de circuit d'asservissement de fréquence optique associé au filtre.

L'invention sera décrite à propos d'un filtre réalisé sur un substrat de phosphure d'indium, pour une application aux télécommunications par fibres optiques dans la bande spectrale large de 1,52 à 1,61 nanomètres.

Le filtre est calculé pour d'une part laisser passer une bande spectrale étroite autour d'une longueur d'onde λᵢ et d'autre part réfléchir les longueurs d'onde en dehors de cette bande. Il est accordable pour donner à la longueur d'onde λᵢ n'importe quelle valeur dans toute la bande spectrale large.

Pour cela, il est constitué par une cavité résonante de Fabry-Pérot, c'est-à-dire une cavité (C) d'air ou d'un milieu d'indice n₀ entre deux miroirs diélectriques parallèles M1 et M2. La distance D entre les miroirs est un multiple entier (k) de la demi-longueur d'onde à sélectionner: D= kλᵢ/2n₀. Les miroirs sont constitués chacun par une alternance de plusieurs couches diélectriques d'indices de réfraction différents et d'épaisseurs bien déterminées. En principe k est choisi égal à 1 (cavité à résonance monomode), car si k est différent de 1 (cavité à résonance multimode), la cavité est transparente non seulement pour λᵢ mais aussi pour d'autres longueurs d'onde séparées les unes des autres de λᵢ/k.

Plus les miroirs sont réfléchissants et plus la sélectivité du filtre est élevée pour la longueur d'onde sélectionnée. Les miroirs sont d'autant plus réfléchissants que la différence des indices de réfraction des couches diélectriques alternées est élevée. Dans l'exemple préférentiel décrit, l'alternance est constituée de couches de phosphure d'indium (indice de réfraction n₁ supérieur à 3, et d'air, ce qui est très favorable, mais on pourrait envisager d'autres couples de couches diélectriques transparentes. La réflexion est d'autant plus indépendante de la longueur d'onde qu'il y a peu de couches dans l'alternance. Or une différence d'indices élevée entre les couches de l'alternance permet d'obtenir une réflexion très élevée même avec un très petit nombre de couches dans chaque miroir.

Il est possible en particulier de réaliser les miroirs M1 et M2 chacun avec seulement deux couches de phosphure d'indium séparées par une couche d'air.

Enfin, une réflexion forte des miroirs est réalisée par un choix judicieux des épaisseurs relatives des couches de l'alternance, compte-tenu de leurs indices de réfraction respective : l'épaisseur optique de chaque couche, c'est-à-dire l'épaisseur réelle divisée par l'indice optique, est un multiple impair du quart de la longueur d'onde pour chacune des couches d'air ou de phosphure d'indium. Pour ces choix d'épaisseur on utilisera de préférence la longueur d'onde moyenne λₘ (environ 1,55 micromètres) de la bande spectrale large dans laquelle fonctionne le filtre.

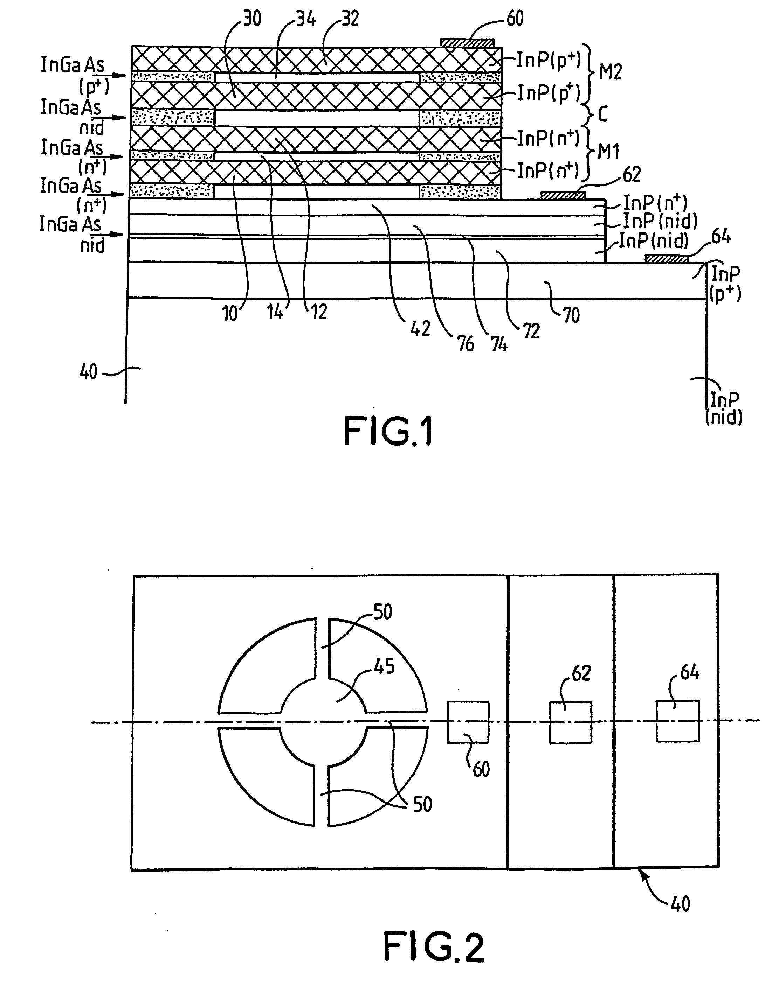

Dans l'exemple de la figure 1, le miroir inférieur M1 est constitué par deux couches de phosphure d'indium 10 et 12 (indice de réfraction n₁) d'épaisseur optique 5λₘ /4, donc d'épaisseur réelle 5λₘ /4n₁, séparées par une couche d'air 14 (indice n₀) d'épaisseur optique et épaisseur réelle λₘ /4.

Le miroir supérieur M2 est constitué comme le miroir M1, avec deux couches de phosphure d'indium 30 et 32 (indice de réfraction n₁) d'épaisseur optique 5λₘ /4, donc d'épaisseur réelle 5λₘ /4n₁, séparées par une couche d'air 34 (indice n₀) d'épaisseur optique et épaisseur réelle λₘ /4.

La cavité à faces parallèles C est une cavité d'air entre les couches 12 et 30, dont l'épaisseur est λᵢ/2 pour obtenir un filtrage sélectif (monomode) à la longueur d'onde λᵢ. On verra que cette épaisseur est ajustable autour d'une valeur nominale D de construction. La valeur de construction D peut être λₘ/2, auquel cas il faut faire varier l'épaisseur en positif et en négatif pour obtenir un accord sur toute la bande spectrale large. On peut aussi imaginer que l'épaisseur nominale D correspond plutôt à un accord sur une des extrémités de la bande spectrale large et faire varier cette épaisseur dans un sens seulement pour couvrir toute la bande.

Ce filtre est donc constitué par une alternance de couches transparentes parallèles de phosphure d'indium séparées par des couches d'air, et il est réalisé par micro-usinage d'un substrat monolithique de phosphure d'indium 40, au moyen d'opérations de dépôt de couches épitaxiales et de gravures appropriées sur ce substrat. On reviendra plus loin sur la fabrication, qui utilise en particulier le dépôt d'autres matériaux semiconducteurs que le phosphure d'indium, notamment de l'arséniure de gallium-indium. Ces matériaux restent présents sur le substrat tout autour du filtre à cavité résonante et constituent des entretoises qui supportent les couches de phosphure d'indium et qui définissent l'épaisseur des lames d'air. Ces matériaux sont choisis d'une part pour leurs propriétés semiconductrices, et d'autre part pour leur aptitude à être gravés sélectivement par rapport au phosphure d'indium.

La couche inférieure 10 du miroir M1 est de préférence séparée de la dernière couche épitaxiale 42 déposée sur le substrat sous-jacent 40 par une lame d'air d'épaisseur optique proche de λₘ/2 ou un multiple de λₘ/2 pour faciliter la transmission de la longueur d'onde λᵢ vers le substrat. La couche épitaxiale 42 sert de base de support au filtre déposé au-dessus.

La lumière arrive par le haut (du côté du miroir M2), par exemple par une fibre optique transportant plusieurs canaux de télécommunications optiques parmi lesquels un canal i à la longueur d'onde λᵢ ; cette longueur d'onde est sélectionnée par le filtre interférométrique (miroirs M1, M2,cavité C) et seule une bande spectrale étroite autour de λᵢ traverse le filtre et atteint le substrat de phosphure d'indium 40. Le substrat est transparent et la lumière est recueillie de l'autre côté du substrat où l'information présente dans le canal i peut être détectée et exploitée. Le reste de la lumière est réfléchi par le filtre de Fabry-Pérot.

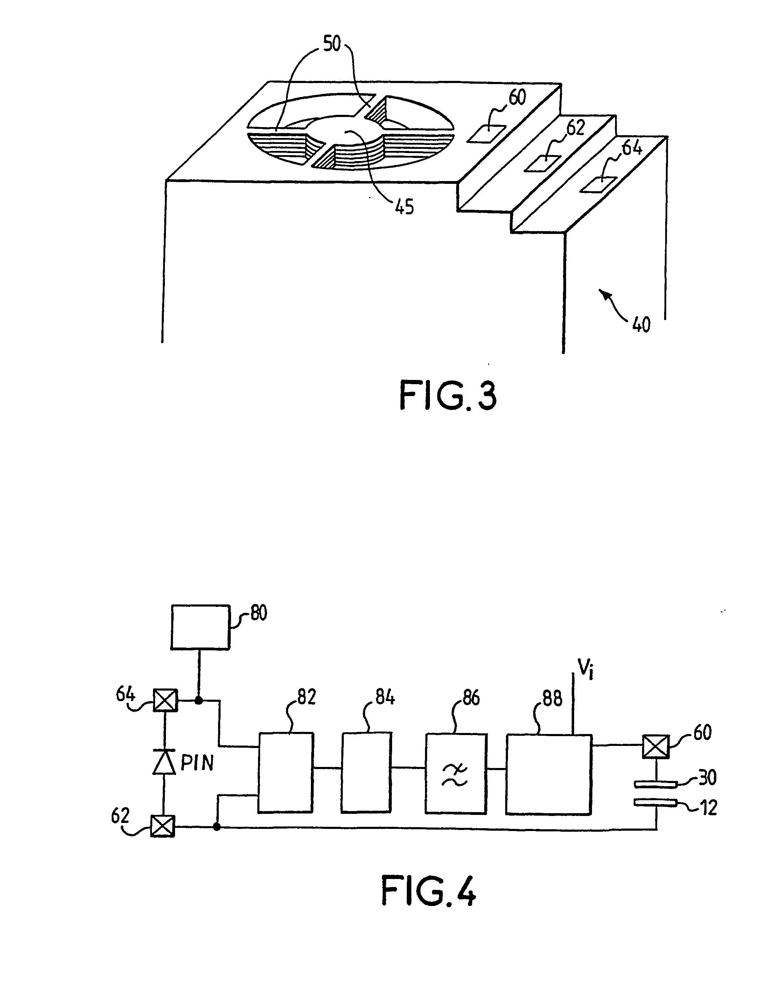

Le filtre est rendu accordable de la manière suivante : les différentes couches diélectriques de phosphure d'indium sont constituées en forme de surfaces centrales 45 (par exemple en forme de disque) suspendues par des bras de suspension 50 comme on peut le voir sur les figures 2 et 3. La raideur de ces bras est suffisante pour maintenir les couches bien parallèles les unes aux autres, mais elle est suffisamment faible pour que, compte-tenu de la distance λₘ/2 entre les deux couches de phosphure d'indium 12 et 30 qui enferment la cavité C, il soit possible de rapprocher ces couches l'une de l'autre, par des forces électrostatiques produites sur ces couches à l'encontre de la raideur des bras 50. Quelques volts appliqués entre les couches peuvent suffire pour modifier de 5% ou plus la distance entre les couches, compte-tenu de la raideur des bras.

Les couches sont semiconductrices, et dopées pour que leur conductivité naturelle soit suffisamment élevée, de sorte qu'il n'est pas nécessaire de prévoir des électrodes sur les couches. Des contacts électriques sont établis sur les couches pour appliquer entre elles la différence de potentiel appropriée, à travers les bras de suspension. Sur les figures, on a représenté un contact électrique 60 pour la connexion à la couche 30 (à travers la couche 32 et une couche entretoise en arséniure de gallium-indium mentionnée plus haut) et un contact électrique 62 pour la connexion à la couche 12 (à travers plusieurs autres couches également).

Une différence de potentiel déterminée correspond à un espacement D+δD déterminé entre les couches 12 et 30, donc à une épaisseur de cavité déterminée et donc à une transmission pour une longueur d'onde déterminée. On peut donc établir un tableau de fonctionnement permettant de sélectionner un canal optique donné en appliquant entre les contacts 60 et 62 la différence de potentiel prédéterminée qui correspond à l'accord sur ce canal.

Selon l'invention, on interpose, entre le substrat 40 et l'alternance de couches diélectriques qui forme le filtre interférométrique, un détecteur photoélectrique qui forme une partie du composant monolithique et qui est réalisé par dépôt et gravure de couches sur le substrat. Ce détecteur est de préférence à très faible absorption pour les longueurs d'onde envisagées (1,52 à 1,61 micromètres) mais à absorption non nulle. L'absorption est de préférence d'environ 1 à 2%.

Le détecteur fournit un signal électrique représentant une faible fraction de l'énergie lumineuse transmise par le filtre. Si on moyenne ce signal électrique en le faisant passer dans un filtre passe-bas, par exemple un filtre de constante de temps 1 microseconde à milliseconde, c'est-à-dire grande par rapport à la durée (inférieure à la nanoseconde) de modulation des informations présentes dans le canal, on peut déterminer une puissance moyenne traversant le filtre. Si le filtre est bien accordé, cette puissance moyenne est plus grande que si le filtre est mal accordé. Le signal issu du détecteur photoélectrique ainsi intégré dans le composant monolithique sert de signal d'entrée pour un circuit d'asservissement de l'accord du filtre. L'asservissement est conçu pour que le filtre soit accordé sur une longueur d'onde telle que la puissance moyenne recueillie par le détecteur soit maximale. Bien entendu, comme il y a un maximum pour chaque canal de transmission actif, l'asservissement est initialisé en accordant à peu près le filtre sur un canal (par exemple à 50 gigahertz près) et en interdisant des excursions de tension d'accord allant au delà d'une limite correspondant à un déplacement de fréquence d'accord d'environ 50 Gigahertz. Après cette initialisation sur un canal donné, l'asservissement joue son rôle en maintenant le filtre exactement accordé sur la fréquence optique incidente, malgré les variations de cette fréquence à l'émission.

Le détecteur est donc intégré dans le composant monolithique, mais il n'empêche pas la transmission, de l'autre côté du substrat 40, de la quasi-totalité de la puissance lumineuse disponible dans le canal i après transit dans le filtre. Cette puissance lumineuse peut être exploitée comme on le désire.

Pour réaliser un tel détecteur photoélectrique intégré à absorption faible, alors que le phosphure d'indium est très transparent pour les longueurs d'onde considérées puisqu'il a un gap d'environ 1,3 électron-volt, on prévoit de préférence de réaliser un détecteur à puits quantique constitué essentiellement par une diode PIN en phosphure d'indium, dans laquelle on a inséré une couche épitaxiale supplémentaire très mince (couche quantique) d'un composé ternaire (tel que InGaAs) ou quaternaire (tel que InGaAsP). Le composé est tel qu'il possède un gap correspondant à une absorption élevée des longueurs d'onde utiles de 1,52 à 1,61 micromètre. Et il est tel que sa maille cristalline soit proche de celle du phosphure d'indium. Son épaisseur est suffisamment faible pour que le dépôt épitaxial de cette couche sur le phosphure d'indium soit possible sans dislocation même en présence d'une différence de maille cristalline. L'épaisseur ne dépasse pas, de préférence, 5 à 20 nanomètres, selon la composition de la couche.

La couche quantique très mince est située au milieu de la couche intrinsèque I de la diode PIN. L'une des couches P ou N de la diode PIN peut être reliée directement ou indirectement au contact 62 pour permettre la polarisation de la diode PIN et le recueil d'un signal de détection ; si le contact 62 n'est pas utilisable à cet effet (il sert déjà à appliquer la tension d'accord du filtre) il faut prévoir un contact supplémentaire dédié à la prise d'un premier contact pour la diode PIN. Un deuxième contact 64 peut être prévu sur l'autre côté de la diode PIN.

Le détail des couches épitaxiales déposées dans l'exemple préférentiel décrit est le suivant, le substrat 40 étant de préférence en phosphure d'indium non intentionnellement dopé (n.i.d.) ou semi-isolant afin qu'il soit bien transparent (le dopage augmente l'absorption des photons).
- couche épitaxiale InP 70 dopée p⁺, sur laquelle le contact 64 peut être directement pris, formant la couche P de la diode PIN ;
- couche épitaxiale InP 72 n.i.d. formant une première partie de la couche intrinsèque I de la diode PIN ;
- couche quantique 74 : couche épitaxiale d'arséniure de gallium-indium très mince, de formule InₓGa₁₋ₓAs où x est choisi pour obtenir un gap d'énergie entre bande de valence et bande de conduction d'environ 0,7 volt, qui permet une bonne absorption des photons dans la bande spectrale large de 1,52 à 1,61 micromètres ; x peut être égal à la valeur 0,532 qui est usuellement choisie lorsqu'on veut adapter exactement la maille cristalline de l'arséniure de gallium-indium à la maille du phosphure d'indium. Dans ce cas, l'épaisseur de la couche peut être d'environ 15 nanomètres pour obtenir une absorption d'environ 1% par le détecteur. Mais on peut choisir des valeurs de x différentes, notamment dans la gamme x = 0,53 à 0,65. Dans ce cas, la maille cristalline est légèrement désadaptée par rapport à celle du phosphure d'indium et on limitera en conséquence l'épaisseur de la couche pour éviter les dislocations ; cette limitation d'épaisseur n'est d'ailleurs pas gênante du point de vue de l'absorption qui augmente lorsque x augmente. Pour x = 0,55 une épaisseur de 10 nanomètres devrait convenir pour une absorption de 1%. Pour x = 0,625, l'épaisseur de la couche devrait être limitée à 5 nanomètres, permettant encore une absorption d'environ 1%. Même s'il y a désadaptation de maille, la faible épaisseur de la couche épitaxiale quantique permet que le dépôt de cette couche suive épitaxialement (toutefois avec des contraintes) la maille du phosphure d'indium ; avec cette épaisseur, les contraintes n'engendrent pas de dislocation ; de plus, la faible épaisseur d'arséniure de gallium-indium provoque une absorption faible de la lumière, permettant à la fois de créer un signal de détection utile et de conserver la majeure partie du rayonnement pour une utilisation autre ;
- couche épitaxiale de phosphure d'indium 76, non intentionnellement dopée, constituant la deuxième partie de la couche intrinsèque I de la diode PIN ; la croissance épitaxiale conserve la maille cristalline originelle du substrat 40 puisque même la couche d'arséniure de gallium indium l'a gardée ;
- couche épitaxiale 42 déjà mentionnée, en phosphure d'indium dopé n⁺, formant la dernière couche avant formation de la cavité de Fabry-Pérot ; le contact 62 est pris sur cette couche de sorte que les contacts 62 et 64 donnent accès respectivement aux couches P et N de la diode PIN, permettant son fonctionnement en photodiode de détection.

La figure 4 représente la manière dont les contacts électriques du composant peuvent être insérés dans un circuit d'asservissement de l'accord du filtre : la diode PIN, polarisée en inverse par un circuit de polarisation 80, fournit un signal, sous forme de tension ou courant, à un circuit de détection 82. Le circuit de détection fournit une tension représentant la quantité de lumière instantanée passant à travers la couche quantique 74. Cette tension, éventuellement amplifiée par un amplificateur 84, est appliquée à un filtre passe-bas 86 dont la constante de temps est très supérieure à la durée des impulsions modulant la lumière du canal optique à la longueur d'onde λᵢ. La constante de temps peut être de 1 microseconde par exemple ou plus.

La tension de sortie du filtre passe-bas est appliquée à un circuit d'asservissement proprement dit 88 qui fournit un signal tendant à maintenir la tension de sortie du filtre passe-bas à une valeur maximale. Un tel circuit établit une tension de commande à appliquer au filtre optique, en fonction du signe de la dérivée de la variation de tension aux bornes du filtre passe-bas. Cette tension de commande est appliquée entre les couches 12 et 30, donc entre les contacts 62 et 60. Elle est telle que si une variation de la tension de commande du filtre optique tend à faire croître la tension de sortie du filtre passe-bas, le circuit d'asservissement tend à faire continuer la variation de la tension de commande dans le même sens, tandis que si une variation de la tension de commande du filtre optique tend à faire décroître la tension de sortie du filtre passe-bas, le circuit d'asservissement tend à inverser le sens de cette variation. On asservit ainsi la tension de commande du filtre (entre les électrodes 60 et 62) sur la position qui donne le maximum de puissance optique dans le détecteur (entre les électrodes 62 et 64).

Le circuit d'asservissement comprend des moyens pour établir une tension approximative Vᵢ représentant la tension théorique qu'il faut appliquer au filtre optique pour obtenir en principe un accord sur le canal i. Le circuit d'asservissement fournira entre les contacts 60 et 62 une tension qui varie autour de Vᵢ dans des limites suffisamment étroites pour ne pas risquer un accrochage sur un canal voisin.

Si on revient à la figure 1, on peut noter la présence d'entretoises sur tout le pourtour de la cavité résonante de Fabry-Pérot. Ces entretoises sont constituées par des couches semiconductrices qui ne sont pas en phosphure d'indium et qui définissent les épaisseurs de lames d'air entre les couches de phosphure d'indium.

La raison pour laquelle ces entretoises ne sont pas en phosphure d'indium est une raison technologique liée à la réalisation des lames d'air par élimination sélective de couches déposées entre deux couches de phosphure d'indium. On choisit un matériau de même maille cristalline que le phosphure d'indium, pour maintenir une croissance épitaxiale d'une couche à la suivante, mais pouvant être éliminé sélectivement par un produit d'attaque qui n'attaque pas le phosphure d'indium. Le matériau d'entretoise choisi est de préférence un alliage ternaire InGaAs dont la composition est celle qui possède la maille cristalline la plus proche de InP, à savoir un alliage In_{0,53}Ga_{0,47}As.

La fabrication de la superposition de couches avec entretoise se fait de la manière suivante : dépôt d'une couche épitaxiale InP, puis dépôt d'une couche InGaAs de maille adaptée, puis dépôt d'une deuxième couche épitaxiale InP. Gravure de cette dernière couche selon un motif précis (dans cet exemple de réalisation : disque avec bras de suspension) jusqu'à mise à nu de la couche InGaAs. Attaque de la couche InGaAs avec un produit qui n'attaque pas InP, avec sous-gravure latérale, c'est-à-dire que InGaAs est enlevé même sous les parties d'INP qui le protègent. On ne conserve que les entretoises qu'on voit sur les figures autour de la cavité résonante et les couches d'InP restent suspendues avec des lames d'air intercalées entre elles.

Le dopage des diverses couches de phosphure d'indium et d'arséniure de gallium indium tient compte de ce que des potentiels doivent être appliqués à travers elles et qu'il faut créer des jonctions pour pouvoir appliquer un potentiel de commande entre les contacts 60 et 62. Ainsi, pour pouvoir appliquer une potentiel entre la couche d'InP 12 et la couche d'InP 30, à travers les contacts 60 et 62, on prévoit la structure superposée suivante au dessus de la couche d'InP 42 dont on rappelle qu'elle est dopée n⁺ :
- couche entretoise In_{0,53}Ga_{0,47}As dopée n⁺
- couche 10 en InP dopée n⁺
- couche entretoise In_{0,53}Ga_{0,47}As dopée n⁺
- couche 12 en InP dopée n⁺
- couche entretoise In_{0,53}Ga_{0,47}As non intentionnellement dopée ; si cette couche était complètement isolante ce serait mieux ; comme elle ne l'est pas, il est nécessaire que les couches supérieures soient dopées p⁺ pour éviter un court-circuit direct entre les contacts 60 et 62. La polarisation entre ces contacts est alors en inverse (positif sur les couches n⁺, négatif sur les couches p⁺) ;
- couche 30 en InP dopée p⁺
- couche entretoise In_{0,53}Ga_{0,47}As dopée p⁺
- couche 32 InP dopée p⁺.

Les contacts 60 et 64 sur des couches InP dopées p⁺ peuvent être en alliage à base d'or et de zinc ; le contact 62 sur une couche InP dopée n⁺ peut être en or.

Dans l'application d'une tension de commande d'accord du filtre, on appliquera une différence de potentiel de polarisation inverse aux jonctions, à savoir le potentiel le plus positif sur le contact 62 et le plus négatif sur le contact 60.

## Revendications

1. Composant de filtrage optique accordable comprenant un filtre optique accordable (M1, M2, C) réalisé dans une structure monolithique micro-usinée, **caractérisé en ce que** la structure monolithique micro-usinée comprend en outre un élément de détection de lumière (70, 72, 74, 76, 42) servant à l'asservissement de la commande d'accord du filtre sur une longueur d'onde reçue par le filtre, cet élément étant traversé par la majeure partie de la lumière filtrée pour permettre son utilisation.

2. Composant de filtrage selon la revendication 1, **caractérisé en ce qu'**il comporte un substrat semiconducteur transparent (40) sur une face, dite face avant, duquel est formée une superposition de couches également transparentes constituant un filtre interférométrique accordable laissant passer sélectivement la lumière dans une bande spectrale étroite centrée sur une longueur d'onde ajustable par une tension électrique, l'élément de détection de lumière étant formé sur la face avant du substrat, entre le substrat et le filtre.

3. Composant de filtrage selon la revendication 1, **caractérisé en ce qu'**il comporte un substrat semiconducteur transparent (40) sur une face, dite face avant, duquel est formée une superposition de couches également transparentes constituant un filtre interférométrique accordable laissant passer sélectivement la lumière dans une bande spectrale étroite centrée sur une longueur d'onde ajustable par une tension électrique, l'élément de détection de lumière étant formé au dessus du filtre.

4. Composant de filtrage selon l'une des revendications 1 et 2, **caractérisé en ce que** le substrat est en phosphure d'indium, et le filtre interférométrique comporte plusieurs couches en phosphure d'indium (10, 12, 30, 32) séparées par des intervalles de largeur contrôlée, parmi lesquels au moins un intervalle (C) a une largeur variable sous la commande d'une tension électrique.

5. Composant de filtrage selon la revendication 4, **caractérisé en ce que** le substrat est en matériau non intentionnellement dopé ou semi-isolant.

6. Composant de filtrage selon l'une des revendications 4 et 5, **caractérisé en ce que** les intervalles sont des lames d'air.

7. Composant de filtrage selon l'une des revendications 1 à 6, **caractérisé en ce que** le détecteur est constitué par une photodiode à puits quantique.

8. Composant de filtrage selon la revendication 7, **caractérisé en ce que** la photodiode comporte au moins une couche semiconductrice dopée de type P (70), une couche semiconductrice non intentionnellement dopée (72, 76), et une couche semiconductrice dopée de type N (42), ces trois couches étant des couches épitaxiales semiconductrices, et une couche épitaxiale (74), d'un alliage semiconducteur différent, insérée dans la couche non intentionnellement dopée, l'épaisseur de la couche épitaxiale étant suffisamment faible pour éviter des dislocations de cette couche malgré les différences de maille cristalline susceptibles d'exister entre cette couche et les couches semiconductrices qui l'encadrent.

9. Composant de filtrage selon la revendication 8, **caractérisé en ce que** la couche épitaxiale (74) est réalisée en un matériau semiconducteur présentant un « gap » d'énergie d'environ 0,775 électronvolt, correspondant à une absorption dans la bande de longueurs d'onde optiques de 1,5 à 1,6 micromètre.

10. Composant de filtrage selon la revendication 9, **caractérisé en ce que** l'épaisseur de la couche épitaxiale (74) est inférieure à 20 nanomètres.

11. Composant de filtrage selon l'une des revendications 8 à 10 **caractérisé en ce que** la photodiode est réalisée à partir de couches de phosphure d'indium, la couche épitaxiale très mince étant en arséniure de gallium-indium InₓGa₁₋ₓAs, où x est compris entre environ 0,53 et 0,63.

12. Composant de filtrage selon l'une des revendications 1 à 11, **caractérisé en ce que** l'absorption lumineuse dans le détecteur est de l'ordre de 1 à 2% au maximum.

13. Procédé pour accorder un composant de filtrage accordable selon l'une des revendications 1 à 12, **caractérisé en ce qu'**il comprend les opérations consistant à recueillir sur l'élément de détection un signal représentant une petite fraction de la lumière traversant cet élément, à moyenner ce signal, et à produire à partir du signal moyenné un signal électrique de commande d'asservissement de l'accord du filtre, tendant à maintenir l'accord du filtre à une valeur qui maximise le signal détecté moyenné.

## Claims

1. Tunable optical filtering component comprising a tunable optical filter (M1, M2, C) produced in a micromachined monolithic structure, **characterized in that** the micromachined monolithic structure furthermore comprises a light detection element (70, 72, 74, 76, 42) used for slaving the tuning control of the filter to a wavelength received by the filter, the majority of filtered light passing through this element so that it can be used.

2. Filtering component according to Claim 1, **characterized in that** it includes a transparent semiconductor substrate (40), on one face of which, referred to as the front face, a stack of likewise transparent layers is formed constituting a tunable interferometric filter that selectively transmits the light in a narrow spectral band, centred on a wavelength which can be adjusted by an electrical voltage, the light detection element being formed on the front face of the substrate, between the substrate and the filter.

3. Filtering component according to Claim 1, **characterized in that** it includes a transparent semiconductor substrate (40), on one face of which, referred to as the front face, a stack of likewise transparent layers is formed constituting a tunable interferometric filter that selectively transmits the light in a narrow spectral band, centred on a wavelength which can be adjusted by an electrical voltage, the light detection element being formed above the filter.

4. Filtering component according to either of Claims 1 and 2, **characterized in that** the substrate is made of indium phosphide and the interferometric filter includes a plurality of indium phosphide layers (10, 12, 30, 32) separated by intervals of controlled width, at least one interval (C) of which has a width that can be varied under the control of an electrical voltage.

5. Filtering component according to Claim 4, **characterized in that** the substrate is made of a material that is not intentionally doped, or a semiinsulator material.

6. Filtering component according to either of Claims 4 and 5, **characterized in that** the intervals are air gaps.

7. Filtering component according to one of Claims 1 to 6, **characterized in that** the detector consists of a quantum-well photodiode.

8. Filtering component according to Claim 7, **characterized in that** the photodiode includes at least one p-type doped semiconductor layer (70), a semiconductor layer (72, 76) that is not intentionally doped, and an n-type doped semiconductor layer (42), these three layers being semiconductor epitaxial layers, and an epitaxial layer (74) of a different semiconductor alloy, which is inserted into the layer that is not intentionally doped, the thickness of the epitaxial layer being small enough to avoid dislocations in this layer in spite of the crystal lattice differences liable to exist between this layer and the semiconductor layers which enclose it.

9. Filtering component according to Claim 8, **characterized in that** the very thin epitaxial layer (74) is made of a material having an energy "gap" of about 0.775 electron volts, corresponding to absorption in the optical wavelength band of from 1.5 to 1.6 micrometres.

10. Filtering component according to Claim 9, **characterized in that** the thickness of the epitaxial layer (74) is less than 20 nanometres.

11. Filtering component according to one of Claims 8 to 10, **characterized in that** the photodiode is made from layers of indium phosphide, the very thin epitaxial layer being made of gallium-indium arsenide InₓGa₁₋ₓAs, where x lies between about 0.53 and 0.63.

12. Filtering component according to one of Claims 1 to 11, **characterized in that** the absorption of light in the detector is of the order of from 1 to 2% at most.

13. Method for tuning a tunable optical component according to one of Claims 1 to 12, **characterized in that** it comprises the operations consisting in collecting from the detection element a signal representing a small fraction of the light passing through this element, in averaging this signal and in producing from the averaged signal an electrical control signal for slaving the tuning of the filter, tending to keep the tuning of the filter at a value which maximizes the averaged detected signal.

## Patentansprüche

1. Abstimmbares optisches Filterbauelement mit einem abstimmbaren optischen Filter (M1, M2, C), das in einer mikrobearbeiteten monolithischen Struktur hergestellt ist, **dadurch gekennzeichnet, dass** die mikrobearbeitete monolithische Struktur außerdem ein Lichterfassungselement (70, 72, 74, 76, 42) aufweist, das zur Regelung der Abstimmungssteuerung des Filters auf eine vom Filter empfangene Wellenlänge dient, wobei dieses Element vom größten Teil des gefilterten Lichts durchquert wird, um seine Verwendung zu ermöglichen.

2. Filterbauelement nach Anspruch 1, **dadurch gekennzeichnet, dass** es ein transparentes Halbleitersubstrat (40) auf einer so genannten vorderen Fläche aufweist, aus dem eine Schichtung von ebenfalls transparenten Schichten geformt wird, die ein abstimmbares interferometrisches Filter bilden, das das Licht selektiv in einem auf eine durch eine elektrische Spannung einstellbare Wellenlänge zentrierten schmalen Spektralband durchlässt, wobei das Lichterfassungselement auf der vorderen Fläche des Substrats zwischen dem Substrat und dem Filter geformt wird.

3. Filterbauelement nach Anspruch 1, **dadurch gekennzeichnet, dass** es ein transparentes Halbleitersubstrat (40) auf einer so genannten vorderen Fläche aufweist, aus dem eine Schichtung von ebenfalls transparenten Schichten geformt wird, die ein abstimmbares interferometrisches Filter bilden, das das Licht selektiv in einem auf eine durch eine elektrische Spannung einstellbare Wellenlänge zentrierten schmalen Spektralband durchlässt, wobei das Lichterfassungselement oberhalb des Filters geformt wird.

4. Filterbauelement nach einem der Ansprüche 1 und 2, **dadurch gekennzeichnet, dass** das Substrat aus Indiumphosphid ist und das interferometrische Filter mehrere Schichten aus Indiumphosphid (10, 12, 30, 32) aufweist, die durch Zwischenräume kontrollierter Breite getrennt werden, von denen mindestens ein Zwischenraum (C) eine unter der Steuerung durch eine elektrische Spannung variable Breite hat.

5. Filterbauelement nach Anspruch 4, **dadurch gekennzeichnet, dass** das Substrat aus einem nicht absichtlich dotierten oder halbisolierenden Werkstoff ist.

6. Filterbauelement nach einem der Ansprüche 4 und 5, **dadurch gekennzeichnet, dass** die Zwischenräume Luftzwischenräume sind.

7. Filterbauelement nach einem der Ansprüche 1 bis 6, **dadurch gekennzeichnet, dass** der Detektor aus einer Photodiode mit Quantentrog besteht.

8. Filterbauelement nach Anspruch 7, **dadurch gekennzeichnet, dass** die Photodiode mindestens eine P-dotierte Halbleiterschicht (70), eine nicht absichtlich dotierte Halbleiterschicht (72, 76) und eine N-dotierte Halbleiterschicht (42), wobei diese drei Schichten halbleitende Epitaxialschichten sind, und eine Epitaxialschicht (74) aus einer anderen Halbleiterlegierung aufweist, die in die nicht absichtlich dotierte Schicht eingefügt ist, wobei die Dicke der Epitaxialschicht gering genug ist, um Lageveränderungen dieser Schicht trotz der Unterschiede in der Kristallgittermasche zu verhindern, die zwischen dieser Schicht und den sie umrahmenden Halbleiterschichten vorhanden sein können.

9. Filterbauelement nach Anspruch 8, **dadurch gekennzeichnet, dass** die Epitaxialschicht (74) aus einem Halbleitermaterial hergestellt wird, das ein Energie-"Gap" von etwa 0,775 Elektronenvolt aufweist, das einer Absorption im optischen Wellenlängenband von 1,5 bis 1,6 Mikrometer entspricht.

10. Filterbauelement nach Anspruch 9, **dadurch gekennzeichnet, dass** die Dicke der Epitaxialschicht (74) unter 20 Nanometer liegt.

11. Filterbauelement nach einem der Ansprüche 8 bis 10, **dadurch gekennzeichnet, dass** die Photodiode ausgehend von Schichten aus Indiumphosphid hergestellt wird, während die sehr dünne Epitaxialschicht aus Gallium-Indium-Arsenid InₓGa₁₋ₓAs hergestellt wird, wobei x zwischen etwa 0,53 und 0,63 liegt.

12. Filterbauelement nach einem der Ansprüche 1 bis 11, **dadurch gekennzeichnet, dass** die Lichtabsorption im Detektor höchstens 1 bis 2% beträgt.

13. Verfahren zum Abstimmen eines abstimmbaren Filterbauelements nach einem der Ansprüche 1 bis 12, **dadurch gekennzeichnet, dass** es Arbeitsgänge aufweist, die darin bestehen, auf dem Erfassungselement ein Signal zu empfangen, das einen kleinen Bruchteil des dieses Element durchquerenden Lichts darstellt, dieses Signal zu mitteln, und ausgehend vom gemittelten Signal ein elektrisches Signal zur Regelungssteuerung der Abstimmung des Filters zu erzeugen, das die Tendenz hat, die Abstimmung des Filters auf einem Wert zu halten, der das erfasste gemittelte Signal maximiert.
